# EUROPEAN PATENT SPECIFICATION

(11) **EP 2 876 946 B1**
(45) Date of publication and mention of the grant of the patent: **28.03.2018**
(21) Application number: 14190185.0
(22) Date of filing: 23.10.2014
(51) Int. Cl.: G06F 1/32, H04W 84/12, H04W 4/00, H04L 29/08, H04L 29/06, H04W 52/02

(54) **CLOUD-ENABLED LOW POWER WI-FI SENSOR**
Cloud-aktivierter Wi-Fi-Sensor mit niedriger Leistungsaufnahme
Capteur WI-FI à faible puissance orienté en nuage

(30) Priority: 21.11.2013 US 201314086217
(43) Date of publication of application: 27.05.2015
(73) Proprietor: Honeywell International Inc., Morris Plains, NJ 07950 (US)
(72) Inventor: Gonia, Patrick S., Morristown, NJ 07962-2245 (US); Liu, Haiyang, Morristown, NJ 07962-2245 (US); Larsen, Christopher S., Morristown, NJ 07962-2245 (US); Jacobson, Vincent C., Morristown, NJ 07962-2245 (US); Schmit, Thomas Paul, Morristown, NJ 07962-2245 (US)
(74) Representative: Houghton, Mark Phillip

(56) References cited:
- US-A1- 2007 297 438
- US-A1- 2012 256 009
- OKI O ET AL: "Evaluating the energy-efficiency of transport layer protocols in a battery-powered wireless mesh networks", WIRELESS COMMUNICATIONS AND APPLICATIONS (ICWCA 2012), IET INTERNATIONAL CONFERENCE ON, IEEE, 8 October 2012 (2012-10-08), pages 1-6, XP032433777, DOI: 10.1049/CP.2012.2081 ISBN: 978-1-84919-550-8

## Description

### FIELD

The present invention relates generally to sensors. More particularly, the present invention relates to a cloud-enabled low power Wi-Fi sensor.

### BACKGROUND

Residential wireless communicating devices are most easily installed when they are self-powered and Wi-Fi enabled. For example, Wi-Fi enabled security sensors, such as, motion sensors, can enable home owners to leverage their existing in-home communication devices, such as Wi-Fi routers, computers, and tablets, for economic, low-cost development and customization of home security and monitoring systems.

Low power Wi-Fi sensors are a desired wireless technology for home security and monitoring systems because such sensors consume less battery as compared to traditional Wi-Fi sensors and accordingly, are energy efficient. Low power Wi-Fi sensors are also a desired wireless technology for home security and monitoring systems because such sensors reduce operation costs.

Furthermore, a significant market exists for battery powered sensors that can wirelessly link to a cloud server via a homeowner's in-home internet connection and/or Wi-Fi access point (AP). For example, if a sensor device can link to a cloud server, then information from the sensor device can be integrated, via a browser enabled device, with various user and social networking services and/or web-based portals, such as a security service provider's website, a third party web-based integration and/or automation framework, and/or a homeowner's Facebook account. However, battery life is an issue, and problems arise when attempting to obtain adequate battery replacement intervals while simultaneously providing timely sensor event reports and timely access to the sensor from a remote web client.

Patent document number US2012/256009A1 describes methods, systems and related architectures for facilitating network communications between a wireless network-connected thermostat and a cloud-based management server in a manner that promotes reduced power usage and extended service life of a rechargeable battery of the thermostat, while at the same time accomplishing timely data transfer between the thermostat and the cloud-based management server for suitable and time-appropriate control of an HVAC system. The thermostat further comprises powering circuitry configured to: extract electrical power from one or more HVAC control wires in a manner that does not require a common wire; supply electrical power for thermostat operation; recharge the rechargeable battery (if needed) using any surplus extracted power; and discharge the rechargeable battery to assist in supplying electrical power for thermostat operation during intervals in which the extracted power alone is insufficient for thermostat operation.

Patent document number US2007/297438A1 describes techniques to improve the standby time of a station in a wireless network. An access point may advertise or convey a maximum listen interval and/or an association timeout supported by that access point. A station may operate in a power-save mode and may wake up every listen interval to receive a beacon and any potential traffic for the station. The station may select a suitable listen interval based on the maximum listen interval. The station may be dormant for a longer duration than the listen interval and may become active at least once in every association timeout in order to keep the association with the access point alive. The access point may also send broadcast and multicast traffic that might be of interest to stations in the power-save mode less frequently and using a special indication message.

Oki O. *et al.* describes methods and systems which address the problem of enabling use of wireless mesh networks in regions in which electricity is scarce. Oki O *et al.* evaluate the influence of TCP and UDP on the lifetime of battery powered nodes when subjected to different transmission power levels and payload sizes.

Low power Wi-Fi sensors or other low-power devices, such as actuators and combination devices, can be expected to operate on two AAA or AA batteries for two years without replacement. Accordingly, there is a continuing, ongoing need for an improved low power Wi-Fi sensor.

The present invention in its various aspects is as set out in the appended claims.

### BRIEF DESCRIPTION OF THE DRAWINGS

FIG. 1A is a block diagram of a system in accordance with disclosed embodiments;
FIG. 1B is a block diagram of a system in accordance with disclosed embodiments;
FIG. 2A is a state machine diagram of a method for operation of a sensor device in accordance with disclosed embodiments;
FIG. 2B is a state machine diagram of a method for operation of a sensor device in accordance with disclosed embodiments;
FIG. 3A is a state machine diagram of a method for operation of a cloud server in accordance with disclosed embodiments;
FIG. 3B is a state machine diagram of a method for operation of a cloud server in accordance with disclosed embodiments;
FIG. 4 is a flow diagram of a method of a sensor exiting a low power sleep mode to transmit a check-in message in accordance with disclosed embodiments;
FIG. 5 is a flow diagram of a method of a sensor device exiting a low power sleep mode to transmit an event message and remaining out of the low power sleep mode to retransmit the event message under the condition that the acknowledgement message is lost in accordance with disclosed embodiments;
FIG. 6 is a flow diagram of a method of a sensor device exiting a low power sleep mode to transmit a check-in message and remaining out of the low power sleep mode to retransmit the check-in message under the condition that the check-in message is lost in accordance with disclosed embodiments;
FIG. 7 is a flow diagram of a method of a sensor device exiting a low power sleep mode to transmit an event message, remaining out of the low power sleep mode to retransmit the event message, and reentering the low power sleep mode after a predetermined number of retransmissions of the event message in accordance with disclosed embodiments;
FIG. 8 is a flow diagram of a method of a cloud server in the condition of having one or more active reconfiguration requests pending for a sensor device instructing the sensor device to remain out of a low power sleep mode and transmitting a reconfiguration message to the sensor device in accordance with disclosed embodiments;
FIG. 9 is a flow diagram of a method of a cloud server in the condition of having one or more active reconfiguration requests pending for a sensor device instructing the sensor device to remain out of a low power sleep mode, transmitting a reconfiguration message to the sensor device, and retransmitting the reconfiguration message to the sensor device in accordance with disclosed embodiments;
FIG. 10 is a flow diagram of a method of a cloud server instructing a sensor device to remain out of a low power sleep mode, transmitting a reconfiguration message to the sensor device, and retransmitting the reconfiguration message to the sensor device in accordance with disclosed embodiments;
FIG. 11 is a flow diagram of a method of a sensor device exiting a low power sleep mode to transmit a reconfiguration message in accordance with disclosed embodiments; and
FIG. 12 is a block diagram of a system for executing the methods in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein include a cloud-enabled low power Wi-Fi sensor device or other low power wireless device. The term sensor device is used herein to discuss embodiments of the present invention. However, it is to be understood that embodiments of the present invention are not so limited. For example, embodiments disclosed herein can include any low power device as would be understood by those of ordinary skill in the art, including, but not limited to, an actuator or any combination device that includes sensors, actuators, displays, and computing resources.

Some embodiments disclosed herein can include a web-based system and method that can cope with the duty-cycled nature of low power Wi-Fi sensors. In some embodiments, rigorous energy conservation schemes, such as duty cycling, are required and can include a sensor triggering an event message whenever a physical event is detected, a sensor triggering a supervisory event once every predetermined period of time to verify the active state of the sensor when no physical event is detected, and/or a sensor transmitting a check-in message once every predetermined period of time for Wi-Fi communication function verification. In some embodiments, a check-in message can include a periodic time interval report message.

Some embodiments disclosed herein can manage power consumption by sleeping at ultra-low power, minimizing the amount of time that a transceiver is on, and/or minimizing the number of transmissions from the sensor device. For example, in some embodiments, to minimize the amount of time that a receiver is on, a sensor device in accordance with disclosed embodiments can operate in a low power sleep mode for a majority of time and can only wake up, that is, exit the low power sleep mode, to respond to a check-in clock interrupt and/or a sensor interrupt line. Accordingly, the check-in clock interrupt and/or the sensor interrupt line can act as triggers for the transceiver to be turned on. In some embodiments, when one of these triggers occurs, the sensor device can exit the low power sleep mode, send a single message to a cloud server, wait, with the ability to receive a message enabled, to receive an acknowledgement message (ACK) from the cloud server, and return to the low power sleep mode. Accordingly, the transceiver can be on only while waiting for an acknowledgement message from the cloud server.

In some embodiments, the cloud server itself can be optimized to respond quickly to a received message with an acknowledgement message that enables the sensor device to return to the low power sleep mode. For example, in some embodiments, the cloud server can transmit an acknowledgement message response to a received message substantially immediately after receiving the message so as to minimize the period of time that a sensor device remains out of a low power sleep mode and so as to minimize the amount of energy consumed by the sensor device. In some embodiments, the acknowledgement message transmitted from the cloud server to the sensor device can include a bit instructing the sensor device to stay awake. Accordingly, the cloud server can enable the sensor device to be configured and/or to stay on-line and/or awake, that is, out of the low power sleep mode.

When no acknowledgement message is received within a predetermined period of time responsive to a message transmitted to the cloud server, the sensor device can re-transmit its message to the cloud server. However, in some embodiments, the sensor device can limit the number of attempts to retransmit its message and return to the low power sleep mode to avoid excessive energy consumption under conditions in which the cloud server may not be available. In some embodiments, the predetermined period of time can include a time period slightly longer than a round trip time period. For example, the round trip time period can include a time for transmission of the message from the sensor device to the cloud server, plus the time for cloud server processing, plus the time for transmission of the acknowledgement receipt from the cloud server to the sensor device.

In some embodiments, upon initial power up, the sensor device can temporarily behave as an AP to provide a web interface for configuring the device. A user can temporarily associate a user device, for example, a smart phone, laptop computer or tablet computer, with the sensor device while the sensor device is temporarily behaving as an AP. The smart phone or other device can configure the sensor device with information, and, after successful configuration, the sensor device can stop behaving as an AP and instead associated as a Wi-Fi client with a local AP, for example, the user's home AP. Once associated, the sensor device can function as a Wi-Fi client and periodically and/or upon event detection send messages to a cloud server, for example, a Cirrus User Datagram Protocol (UDP) web server. When the sensor device receives an acknowledgement message from the cloud server, the sensor device can transition to the ultra-low power duty cycle mode, that is, the low power sleep mode, until a subsequent event occurs and/or until the next time to transmit a message arrives.

To achieve timely web access from a remote internet web client to the sensor device, the sensor device in accordance with disclosed embodiments can periodically and efficiently check in with the cloud server, via the local AP, in a manner as outlined above. In some embodiments, the period between attempts to check in with the cloud server can be stretched out to a maximum time that a user is willing to wait to get a response directly from the sensor device. In some embodiments, a server can act as a surrogate for the sensor device while sensor device access is pending.

To maintain its ability to exit the low-power sleep mode and immediately send a message, the sensor device as disclosed herein can keep its AP association active while sleeping, that is, while in the low power sleep mode. To maintain an active access point association, in some embodiments, the sensor device can maintain a current security key, DHCP allocation, and/or other state information necessary to resume operation following a sleep period. Additionally or alternatively, to maintain an active access point association, in some embodiments, the sensor device can send a packet to the access point once every predetermined period of time, for example, once per minute or more than once per minute, to avoid having the access point tear down the association.

For example, in some embodiments, the sensor device can periodically exit the low power sleep mode and transmit a message packet, even a null message packet, to the access point with which it is connected and/or associated in order to maintain the sensor device's association with the access point throughout the duration of the sensor device's low power sleep mode. Although periodically transmitting packets to an access point can consume power, in some embodiments, the negative effect of such power consumption can be outweighed by the positive effect of saving power by avoiding the need to reestablish an association with the access point every time the sensor device must send an event message to the cloud server.

In some embodiments, systems and methods disclosed herein can provide for normal operation and interaction between the sensor device and the cloud server to include a two packet exchange. For example, a first packet can be sent from the sensor device to the cloud server, and a second packet, for example, an acknowledgement message, can be sent from the cloud server to the sensor device. Accordingly, in some embodiments, normal operation and interaction need not include a verbose TCP connection as is the case for normal internet traffic. Instead, for power efficiency, a maximum power savings can be obtained by, responsive to event and check-in conditions, allowing for one UDP packet or message to be sent from the sensor device to the cloud server and for one UDP packet or message (ACK) to be sent from the cloud server to the sensor device. In embodiments in which there is a need for more extensive or continued dialogue, for example, dialog with higher throughput, between the sensor device and the cloud server and/or in embodiments in which there is a need for a for communication with higher reliability, systems and methods disclosed herein can support a conversion to a TCP connection with full services.

In some embodiments, security can be maintained by attaching a message authentication code to each message transmitted from the sensor device to the cloud server and/or to each message transmitted from the cloud server to the sensor device. In some embodiments, the security provided by the message authentication code can span the sleep intervals of the sensor device.

In some embodiments, security can be maintained by encrypting at least some of the data in messages transmitted from the sensor device to the cloud server and/or from the cloud server to the sensor device. In some embodiments, security can be maintained by use of a security key. In some embodiments, once a security relationship is established between the sensor device and the cloud server, the security features, including encrypting message content for privacy and/or authenticating the source and integrity of messages, can remain fully in force, despite long sleep periods and/or the unavailability of the sensor device.

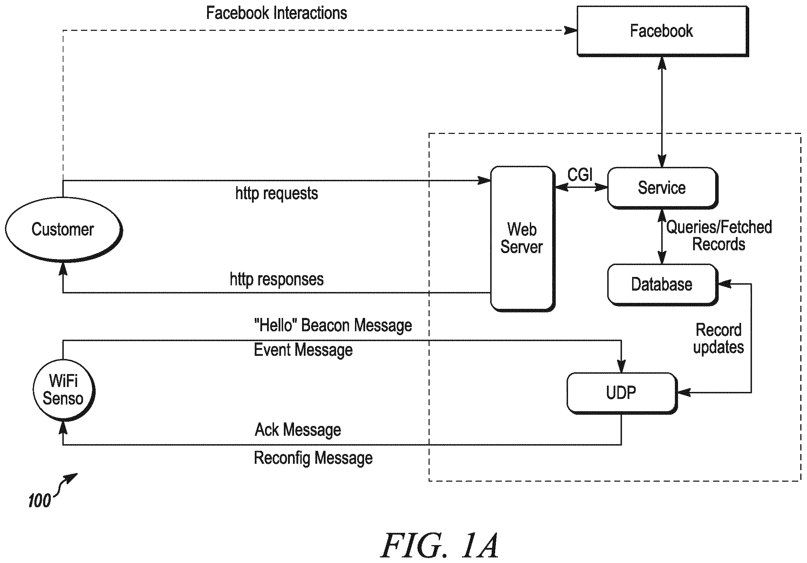

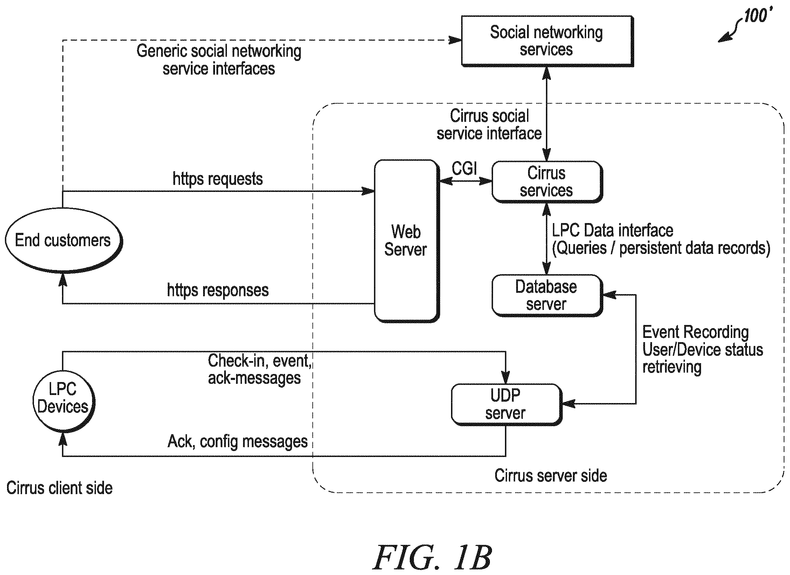

According to disclosed embodiments, a sensor device and a cloud server as disclosed herein can communicate data via UDP. For example, the UDP service can be structured on the server side as a back end process and a database server device can be used as a gateway to other services. FIG. 1A and FIG. 1B are block diagrams of systems 100 and 100', respectively, in accordance with the above.

As explained above, the sensor device and cloud server in accordance with disclosed embodiments can transmit messages to one another. In some embodiments, each message transmitted from the sensor device to the cloud server and/or from the cloud server to the sensor device can include, for example, 104 bits or 128 bits, although embodiments disclosed herein are not so limited. For example, the message, such as a UDP message, transmitted from the sensor device to the cloud server and/or from the cloud server to sensor device can include the following information fields: a message type field, a tag identifier field, a sequence number field, a time stamp field, and an event field. The tag identifier field, sequence number field, time stamp field, and event field can be included in the payload of the message.

The message type field can be included in the header of the message, and in some embodiments, the message type field can include an 8-bit value that defines both the content and meaning of the message payload. For example, the message type field can be used by the cloud server to distinguish between types of messages and how message payloads should be parsed.

The tag identifier field in the payload of the message can include a unique identifier of the sensor device, the status/event of the sensor device, and/or a time stamp. In some embodiments, the same message structure can be used for both status event messages (triggered by a sensor) and periodic report or check-in messages (signaling that the sensor device is alive and reporting its status). In some embodiments, a check-in message can include a current tag configuration that can be used as a passive acknowledgement message for reconfiguration requests. In some embodiments, to prevent the collision of sensor identifications, a globally unique 48-bit MAC address of the sensor device's Wi-Fi radio can be used as the tag identifier.

The sequence number field in the payload of the message can include a number that can be used by the cloud server to facilitate reliable delivery and/or to monitor a number of missed messages.

The time stamp field in the payload of the message can be used for keeping events from the same tag identifier in proper temporal order. For example, in some embodiments, the time stamp field can include a 32-bit integer specifying a number of seconds that elapsed since the device associated with the tag identifier was last powered up.

Finally, for status event messages, the event field in the payload of the message can include an 8-bit number showing a current sensor status. For check-in messages, the event field in the payload of the message can include a 32-bit number showing a current duty cycle period in seconds.

As explained above, messages transmitted between the sensor device and cloud server are not limited to the UDP messages. For example, in some embodiments, a light-weight energy efficient communication protocol, such as a Cirrus Application Level Protocol (CALP) can run on top of UDP and provide enhanced communication reliability between the sensor device and the cloud server. In these embodiments, each message transmitted from the sensor device to the cloud server and/or from the cloud server to the sensor device can include the following information fields: an IP header and an IP payload. The IP payload can include a UDP header and a UDP payload, and the UDP payload can include a CALP header, a CALP payload, and a message integrity code.

In some embodiments, the UDP payload can include a 128-bit, keyed hash or message integrity code that is computed over the payload. In some embodiments, the CALP header can include a device identifier field, a CALP version identifier field, a CALP sequence number field, a CALP attributes field, and a CALP message identifier field.

The device identifier field in the CALP header can include a globally unique 48-bit MAC address of the sensor device's Wi-Fi radio, which can act as the identifier for the sensor device. The CALP version identifier field in the CALP header can include an 8-bit value providing for CALP protocol migration. The CALP sequence number field can include a unique 64-bit sequence number that can be used for reliable, in sequence message delivery between the sensor device and the cloud server and to monitor the number of missed communications. In some embodiments, a retransmission of a message can include the same CALP sequence number as the originally transmitted message.

In some embodiments, the CALP attributes field in the CALP header can include 8 bits defining flags used for communication reliability enhancement. For example, some of the bits in the CALP attributes field of the CALP header can indicate whether the message originated from the cloud server, whether the message is an acknowledgement message, whether the transmitter of the message requests the receiver of the message to stay awake, that is, out of a low power sleep mode, whether parsing and processing of a received message was successful, and/or whether the sensor device is using manufacturer default security keys.

The CALP message identifier field in the CALP header can indicate the type of message, for example, a physical event message, a check-in message, a supervisory event message, a configuration message, an acknowledgement message, and the like.

In some embodiments, an event message can be triggered by an event or other condition detected by the sensor device. An event message can include the status and/or event of the sensor device and a time stamp in the CALP payload. For example, the CALP payload field for an event message can include a 32-bit time stamp and an 8-bit event code. The time stamp can be used for properly time sequencing events and can specify the number of seconds that have elapsed since the last time the sensor device had its battery replaced.

In some embodiments, a beacon, or check-in, message can be triggered by a timer. For example, the check-in message can enable the sensor device to check in with the cloud server. In some embodiments, the cloud server can adjust the expiration time for the timer via configuration and/or reconfiguration messages transmitted to the sensor device. In some embodiments, the CALP payload field for a check-in message can include a 32-bit time stamp and an 8-bit event code. The time stamp can mark the time when the timer triggered the check-in message.

In some embodiments, a supervisory event message can be triggered by a timer. Furthermore, the CALP payload field for a supervisory event message can include a 32-bit time stamp and an 8-bit event code.

In some embodiments, a configuration message can be used to change the operating parameters of a sensor device. For example, the CALP payload field for a configuration message can include an 8-bit configuration parameter identifier, an 8-bit parameter length, a configuration value, and/or additional configuration parameters.

As explained above, after the cloud server receives any of the messages as described above from a sensor device, the cloud server can transmit an acknowledgement message to the sensor device. Similarly, after the sensor device receives any of the messages as described above from the cloud server, the sensor device can transmit an acknowledgement message to the cloud server. In some embodiments, an acknowledgement message can include the following information fields: a constant 8-bit message type field and an 8-bit sequence number field. For example, in some embodiments, the 8-bit sequence number field can include the same sequence number from the incoming message the acknowledgement message is acknowledging. In some embodiments, an acknowledgement message can include a CALP payload field that indicates the success or failure of receiving, parsing, and/or processing the message that the message is acknowledging.

In some embodiments, instead of and/or in addition to transmitting an acknowledgement message, the cloud server can transmit a reconfiguration message, a stay awake message, and/or an acknowledgement message with an asserted stay awake indication responsive to a received message from a sensor device. A reconfiguration message can include the following information fields: a constant 8-bit message type field, an 8-bit sequence number field, and an arbitrary number of configuration identification/configuration value pair fields. For example, in some embodiments, the 8-bit sequence number field can include the same sequence number from the incoming message the acknowledgement receipt is acknowledging. In some embodiments, the configuration identification/configuration value pair fields can support a duty cycle reconfiguration by specifying a new duty cycle period in seconds. In some embodiments, configuration values can be saved in persistent storage on a tag for a sensor device so that the sensor device can resume its latest configuration after any battery replacement.

In some embodiments, when the cloud server receives any message from the sensor device, the cloud server can respond to the received message in a quick manner. When response time is fast, the energy consumption in the sensor device associated with delivering the message to the cloud server can be reduced because, in some embodiments, the sensor device can remain awake and out of the low power sleep mode while waiting for a response message from the cloud server.

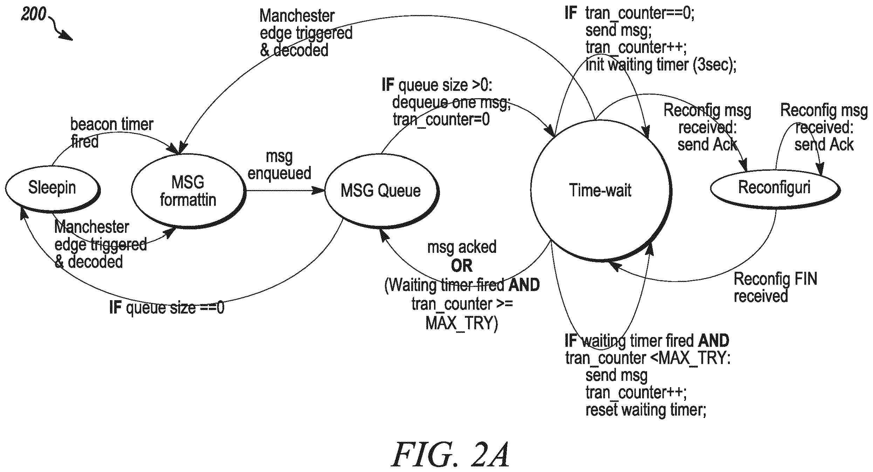

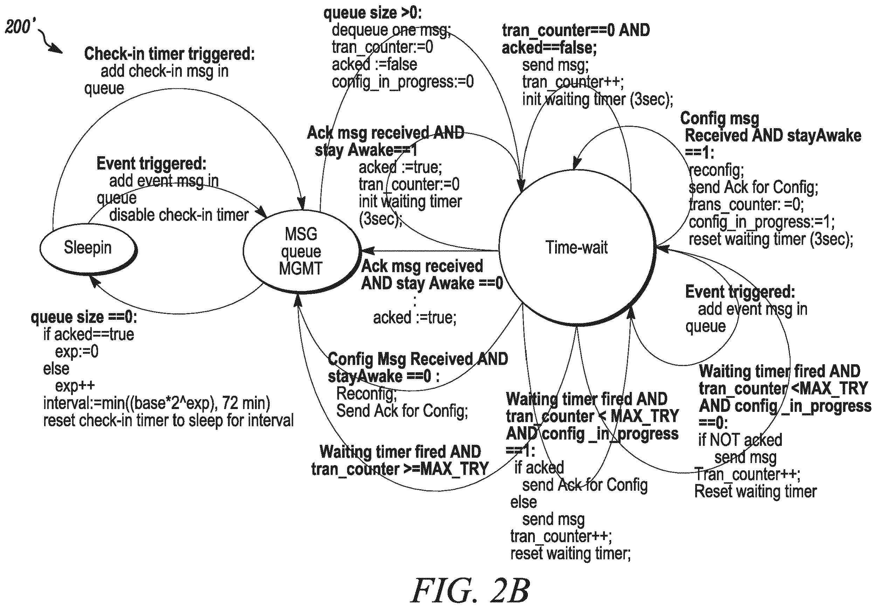

FIG. 2A and FIG. 2B are state machine diagrams of methods 200 and 200', respectively, for operation of a sensor device in accordance with disclosed embodiments. As seen in FIG. 2A and in FIG. 2B, a sensor device can exit a low-power sleep mode upon occurrence of a triggering event, for example, a Manchester edge triggering event, and/or upon expiration of a beacon or check-in timer expiration event. In some embodiments, a supervisory message that is triggered once every predetermined period of time can be considered an event.

When the sensor device detects an event to exit the low power sleep mode and thus, exits the low power sleep mode, the sensor device can construct either an event message or a check-in message that can be formatted according to the message structures explained above and others in accordance with disclosed embodiments. In some embodiments, constructed messages can be filtered to remove and/or suppress duplicate event messages, and filtered messages can be queued, causing the sensor device to enter a queue management mode.

While in the queue management mode, the sensor device can determine the size of its message queue. When the message queue is empty, the sensor device can return to the low power sleep mode. However, when the message queue is not empty, a first message in the queue can be de-queued, and the sensor device can enter a time/wait mode.

Once in the time/wait mode, the sensor device can transmit the de-queued message to a cloud server. Upon transmission of a message, a wait timer can be initialized and set for a predetermined period of time. The sensor device can stay in the time/wait mode until it receives an acknowledgement message from the cloud server responsive to the transmitted message and/or for a maximum number of retransmissions of the de-queued message. For example, when the sensor device fails to receive an appropriate acknowledgement message responsive to a transmitted message within the predetermined period of time, the sensor device can re-transmit the message. However, the number of retransmission attempts can be limited in order to limit power consumption. When the sensor device receives an appropriate acknowledgement message, the sensor device can return to the queue management mode.

In some embodiments, the sensor device can receive a reconfiguration message from a cloud server. If the sensor device is in the time/wait mode upon receipt of a reconfiguration message, the sensor device can transmit an acknowledgement message responsive to the reconfiguration message and enter a reconfiguration mode.

When in the reconfiguration mode, the sensor device can stay awake, that is, out of the low power sleep mode and cycle through a process of receiving a reconfiguration message and transmitting an acknowledgement message until the sensor device receives a reconfiguration message indicating that reconfiguration is complete. Once reconfiguration is complete, the sensor device can return to the time/wait mode.

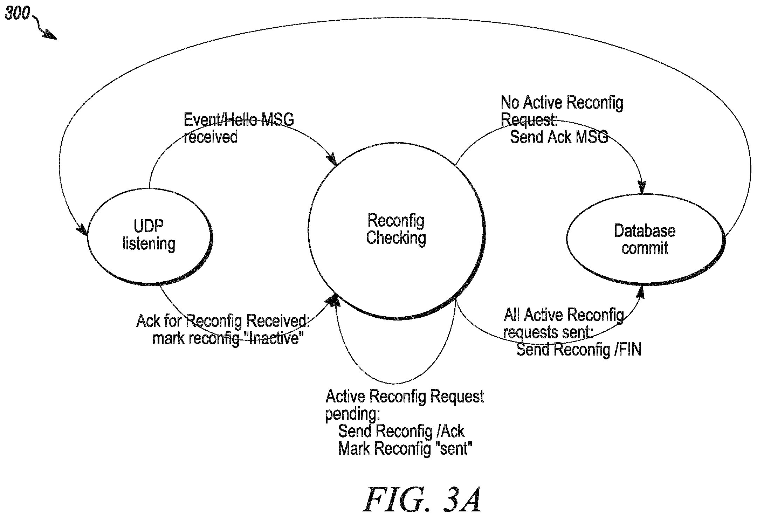

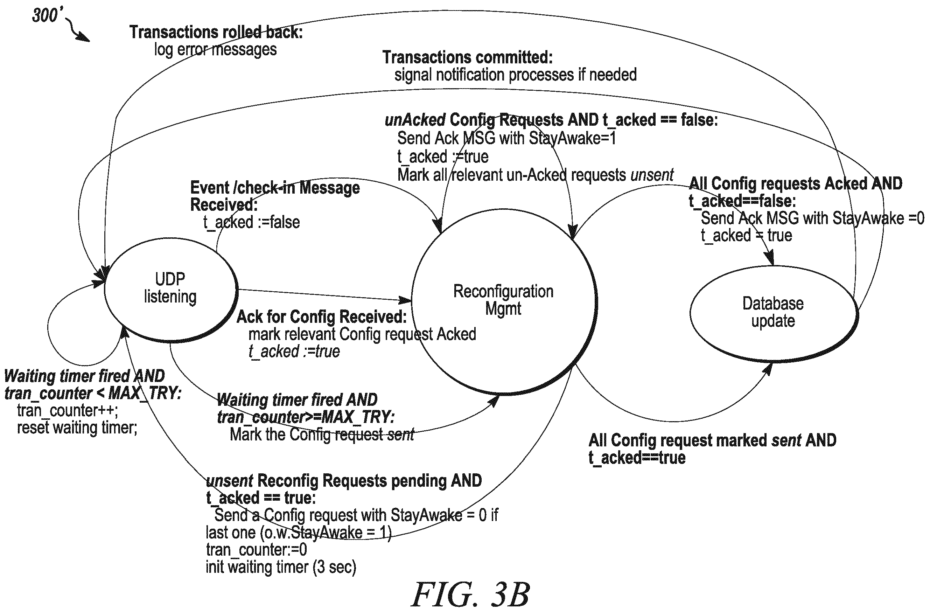

FIG. 3A and FIG. 3B are state machine diagrams of methods 300 and 300', respectively, for operation of a cloud server device in accordance with disclosed embodiments. In some embodiments, the cloud server can include a UDP server process.

As seen in FIG. 3A and in FIG. 3B, upon startup, the cloud server can enter a UDP listing mode and, upon receipt of any message, the cloud server can enter a reconfiguration checking mode. In the reconfiguration checking mode, the cloud server can consult a database for active reconfiguration requests, and, if there are no active reconfiguration requests for a sensor device from which a message was received, then the cloud server can enter a database commit mode to update the database with the payload in the received message. In some embodiments, one or more active reconfiguration requests may have been pending as a result of a customer web client interacting with the web server shown in FIG. 1A. In these embodiments, the web server can adjust the database to record the active reconfiguration request for the particular sensor.

However, if there are any active reconfiguration requests for the sensor device, the cloud server can immediately format and transmit a reconfiguration message to the sensor device. In some embodiments, the transmitted reconfiguration message can also function as an acknowledgement message for the received message. Once a reconfiguration message is transmitted, the active reconfiguration request can be marked as sent in the database, although the reconfiguration request can remain active until the cloud server receives an acknowledgement message for the transmitted reconfiguration message. Upon receipt of such an acknowledgement message, the reconfiguration message can be marked as completed and/or inactive in the database. When all active reconfiguration requests are marked as completed, the cloud server can enter the database commit mode.

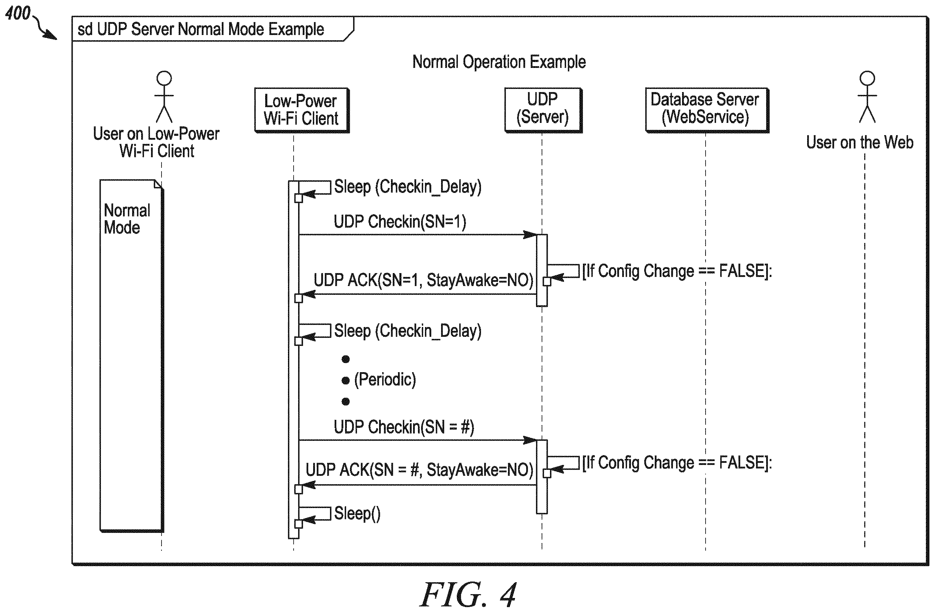

FIG. 4 is a flow diagram of a method 400 of a sensor device exiting a low power sleep mode to transmit a check-in message in accordance with disclosed embodiments. As seen in FIG. 4, a sensor device can exit a low power sleep mode to transmit a check-in message to a cloud server. The sensor device can remain out of the low power sleep mode until the sensor device receives an acknowledgment message from the cloud server and, upon receipt of the acknowledgement message, the sensor device can reenter the low power sleep mode. This process can reoccur periodically, for example, upon expiration of a timer set for a predetermined period of time. Accordingly, in some embodiments, the sensor device can include a wake cycle during which the sensor device remains out of the low power sleep mode for transmission of the check-in message to the cloud server and for transmission of the acknowledgement message from the cloud server.

In accordance with IEEE 802.11, in some embodiments, the sensor device can include an intermediary mode in which the sensor device out of the low power sleep mode, but is not in a power consumption mode as shown and described herein. For example, in the intermediary mode, the sensor device can consume more power than in the low power sleep mode, but less power than a standard operating mode. In some embodiments, the sensor device can enter the intermediary mode while waiting to receive an acknowledgement message.

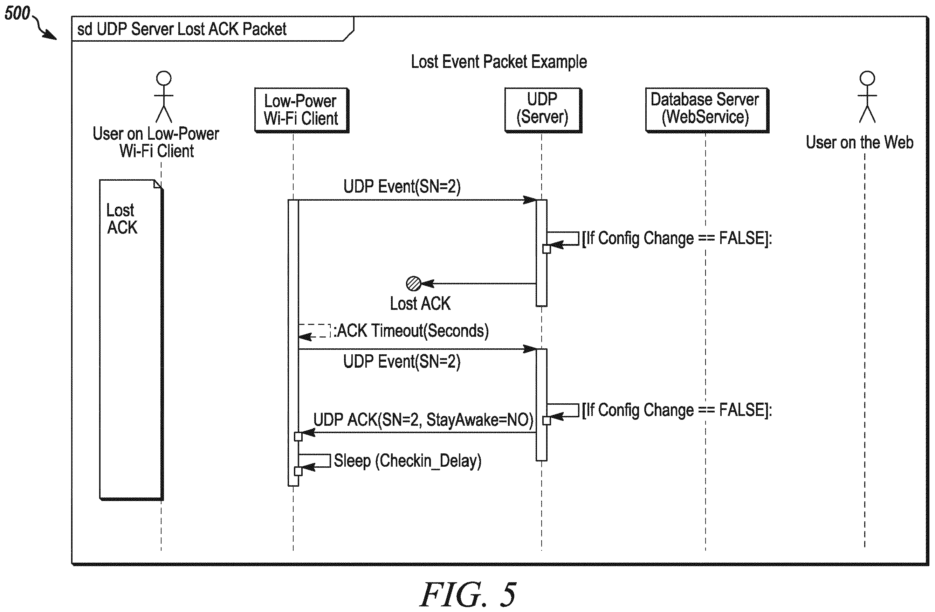

FIG. 5 is a flow diagram of a method 500 of a sensor device exiting a low power sleep mode to transmit an event message and remaining out of the low power sleep mode to retransmit the event message under the condition that the acknowledgement message is lost in accordance with disclosed embodiments. As seen in FIG. 5, a sensor device can exit a low power sleep mode to transmit an event message to a cloud server. The sensor device can remain out of the low power sleep mode while waiting for an acknowledgement message from the cloud server, and after a predetermined period of time without receiving the acknowledgement message, the sensor device can retransmit the event message. Then, upon receipt of an acknowledgement message responsive to the retransmitted event message, the sensor device can reenter the low power sleep mode. This limited retransmission can provide higher reliability than possible in known systems and methods with UDP messages while enabling the sensor to minimize and limit the amount of energy spent trying to deliver the message to the cloud server.

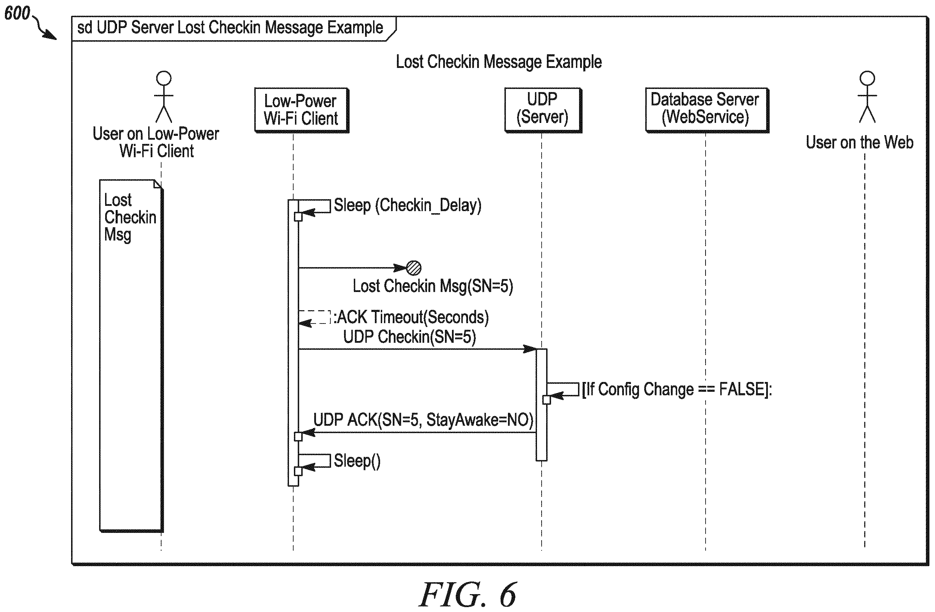

FIG. 6 is a flow diagram of a method 600 of a sensor device exiting a low power sleep mode to transmit a check-in message and remaining out of the low power sleep mode to retransmit the check-in message under the condition that the check-in message is lost in accordance with disclosed embodiments. As seen in FIG. 6, a sensor device can exit a low power sleep mode to transmit a check-in message to a cloud server. The sensor device can remain out of the low power sleep mode while waiting for an acknowledgement message from the cloud server, and after a predetermined period of time without receiving the acknowledgement message, the sensor device can retransmit the check-in message. Then, upon receipt of an acknowledgement message responsive to the retransmitted check-in message, the sensor device can reenter the low power sleep mode. Accordingly, as seen in FIGs. 5 and 6, the sensor device can act to minimize energy consumption by waiting to retransmit the event or check-in message slightly longer than the expected or typical round trip time that would occur for the sensor device to receive an acknowledgement message from the cloud server.

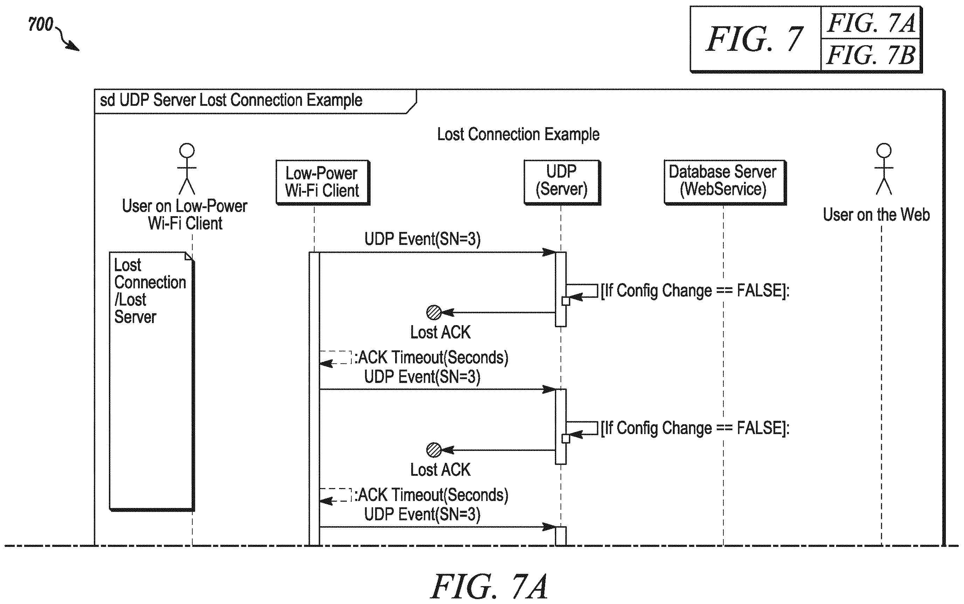

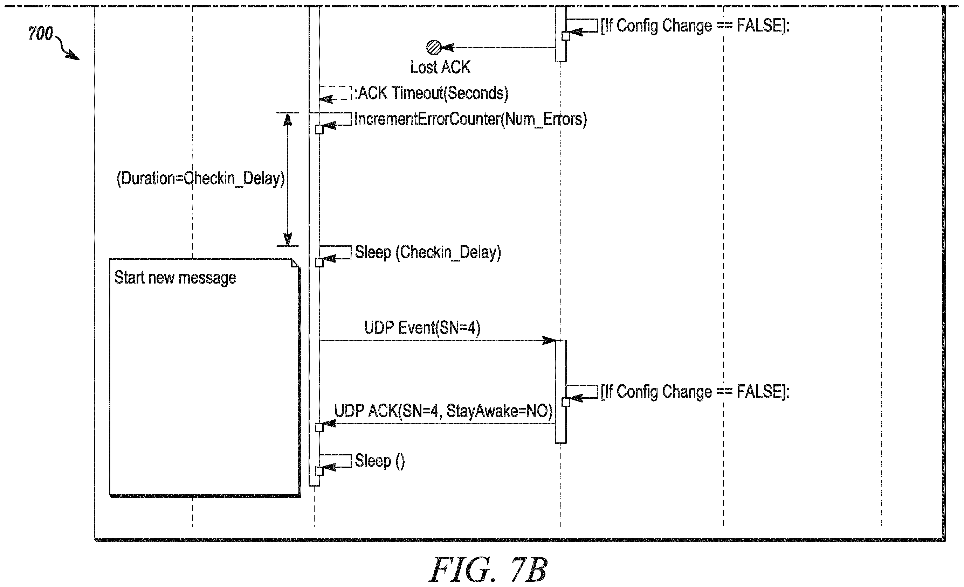

FIG. 7 is a flow diagram of a method 700 of a sensor device exiting a low power sleep mode to transmit an event message, remaining out of the low power sleep mode to retransmit the event message, and reentering the low power sleep mode after a predetermined number of retransmissions of the event message in accordance with disclosed embodiments. As seen in FIG. 7, a sensor device can exit a low power sleep mode to transmit an event message to a cloud server. The sensor device can remain out of the low power sleep mode while waiting for an acknowledgement message from the cloud server, and after a predetermined period of time without receiving the acknowledgment message, the sensor device can retransmit the event message. This process can repeat until the sensor device has retransmitted the event message a predetermined number of times. Then, the sensor device can reenter the low power sleep mode even without receiving an acknowledgement message as a means to control power consumption in the sensor device under conditions where the cloud server may not be accessible. However, the sensor device can continue to function normally. For example, when a new event is detected, the sensor device can exit the low power sleep mode and transmit an event message for the newly detected event. The sensor device can remain out of the low power sleep mode until the sensor device receives an acknowledgment message from the cloud server and, upon receipt of the acknowledgement message, the sensor device can reenter the low power sleep mode.

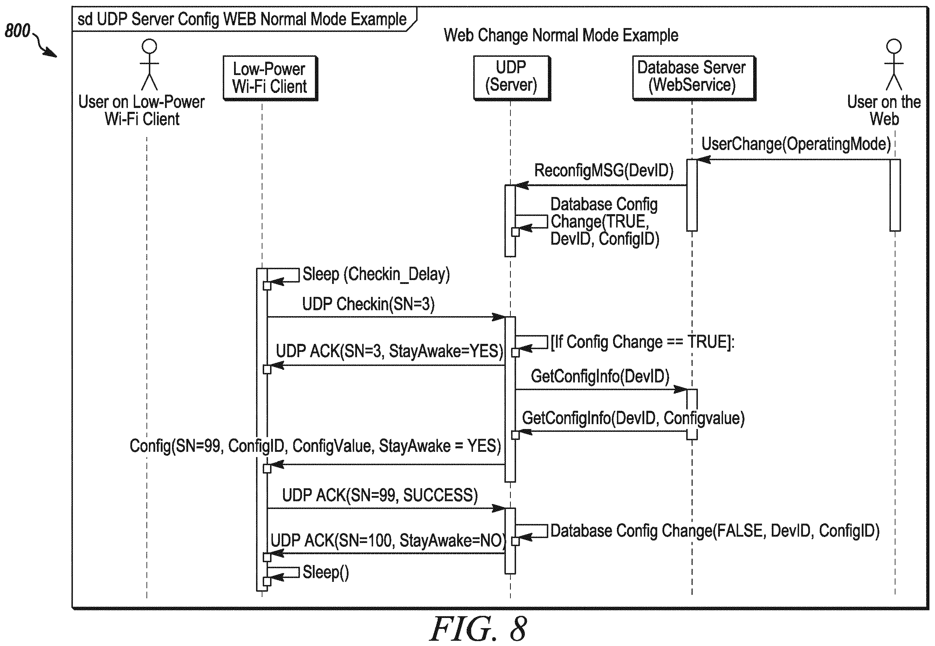

FIG. 8 is a flow diagram of a method 800 of a cloud server in the condition of having one or more active reconfiguration requests pending for a sensor device instructing the sensor device to remain out of a low power sleep mode and transmitting a reconfiguration message to the sensor device in accordance with disclosed embodiments. As seen in FIG. 8, a user on the internet can update an associated database in the cloud server to indicate that a sensor device should be reconfigured. Separately, the sensor device can exit a low power sleep mode and transmit a check-in message to the cloud server. Upon receipt of the check-in message, the cloud server can consult the database and identify the sensor device that transmitted the check-in message as needing reconfiguration. Accordingly, the cloud server can transmit an acknowledgement message to the sensor device and include a bit therein, for example, a stay awake bit, instructing the sensor device to remain out of the low power sleep mode. For example the stay awake bit in the message can be asserted as true.

Upon receipt of the message with the stay awake message asserted, the sensor device can alter its normal behavior such that, instead of immediately entering a low power sleep mode after receipt of the acknowledgement message, the sensor device can stay awake. Then, the cloud server can obtain reconfiguration information from the database and transmit a reconfiguration message to the sensor device with the expectation that the sensor device will be awake for reception of the reconfiguration message. Upon receipt of the reconfiguration message, the sensor device can reconfigure itself according to information in the reconfiguration message and transmit an acknowledgement message to the cloud server to indicate successful reconfiguration. Then, the cloud server can update the database to indicate that the sensor device has been reconfigured and transmit an acknowledgement message to the sensor device indicating that reconfiguration is complete and/or that the sensor device may return to the low power sleep mode. In this case, the acknowledgement message can have the stay awake bit de-asserted. Accordingly, upon receipt of such a message, the sensor device can reenter the low power sleep mode. It is to be understood that, in some embodiments, the sensor device can maintain control of its energy consumption and, after a predetermined time out period, return to the low power sleep mode when the cloud server fails to respond in a timely manner with an acknowledgement message that includes a de-asserted stay awake bit.

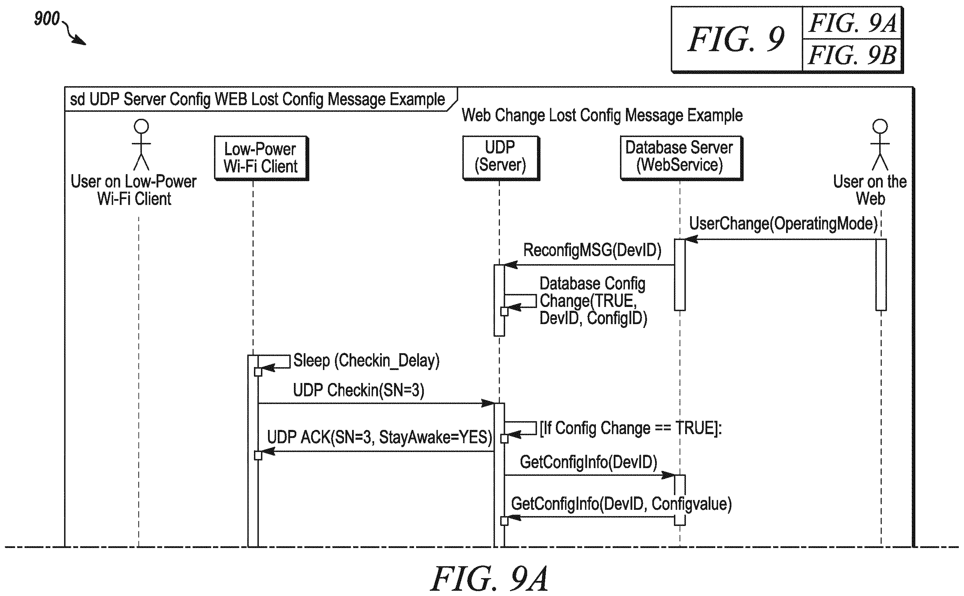

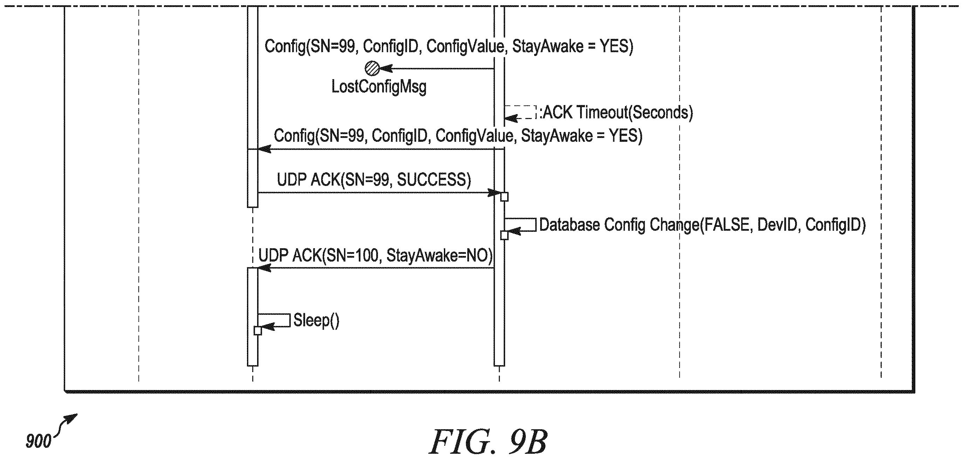

FIG. 9 is a flow diagram of a method 900 of a cloud server in the condition of having one or more active reconfiguration requests pending for a sensor device instructing the sensor device to remain out of a low power sleep mode, transmitting a reconfiguration message to the sensor device, and retransmitting the reconfiguration message to the sensor device in accordance with disclosed embodiments. In these embodiments, the retransmission of the reconfiguration message is necessary because of a lost reconfiguration message.

As seen in FIG. 9, a user on the internet can update an associated database in the cloud server to indicate that a sensor device should be reconfigured. Separately, the sensor device can exit a low power sleep mode and transmit a check-in message to the cloud server. Upon receipt of the check-in message, the cloud server can consult the database and identify the sensor device that transmitted the check-in message as needing reconfiguration. Accordingly, the cloud server can transmit an acknowledgement message to the sensor device and include a bit therein instructing the sensor device to remain out of the low power sleep mode. Then, the cloud server can obtain reconfiguration information from the database and transmit a reconfiguration message to the sensor device. When the cloud server fails to receive an acknowledgement message responsive to the reconfiguration message after a predetermined period of time, for example, because the reconfiguration message was not received by the sensor device, the cloud server can retransmit the reconfiguration message to the sensor device. Upon receipt of the transmitted and/or retransmitted reconfiguration message, the sensor device can reconfigure itself according to information in the message and transmit an acknowledgement message to the cloud server to indicate successful reconfiguration. Upon receipt of the acknowledgement message, the cloud server can update the database to indicate that the sensor device has been reconfigured and transmit an acknowledgement message to the sensor device indicating that reconfiguration is complete and/or that the sensor device must no longer remain out of the low power sleep mode. Upon receipt of such a message, the sensor device can reenter the low power sleep mode.

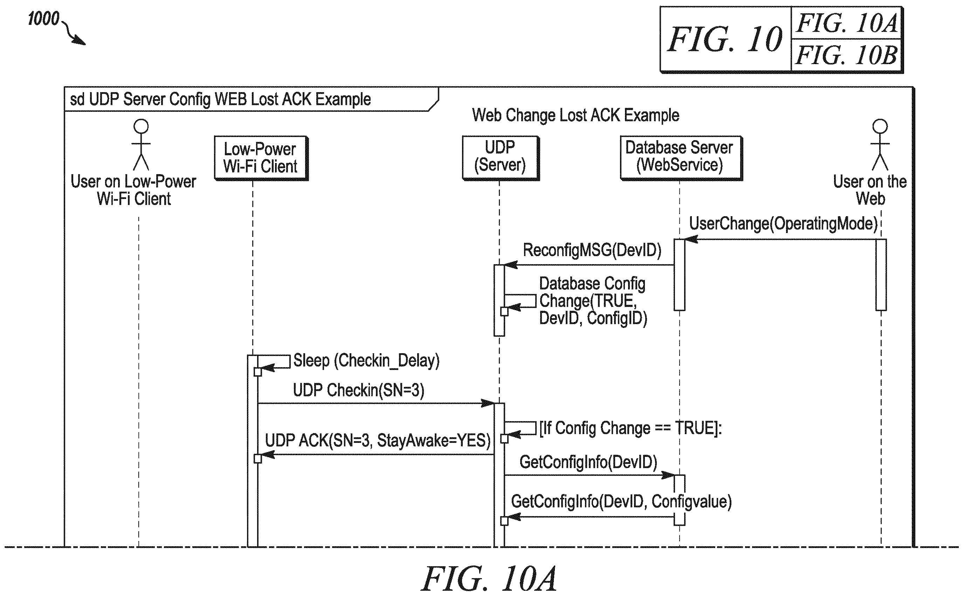

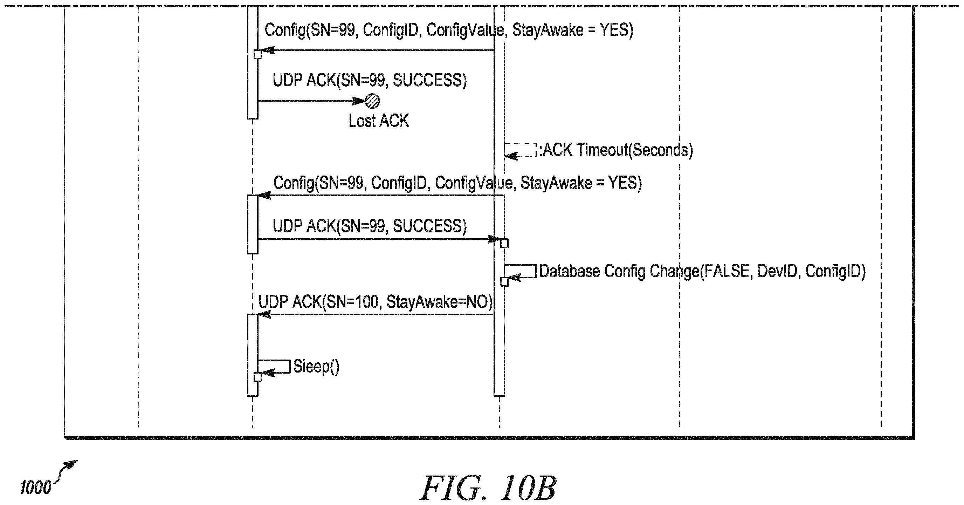

FIG. 10 is a flow diagram of a method 1000 of a cloud server instructing a sensor device to remain out of a low power sleep mode, transmitting a reconfiguration message to the sensor device, and retransmitting the reconfiguration message to the sensor device in accordance with disclosed embodiments. In these embodiments, the retransmission of the reconfiguration message is necessary because of a lost acknowledgement message responsive to the reconfiguration message.

As seen in FIG. 10, a cloud server can update an associated database to indicate that a sensor device should be reconfigured. Separately, the sensor device can exit a low power sleep mode and transmit a check-in message to the cloud server. Upon receipt of the check-in message, the cloud server can consult the database and identify the sensor device that transmitted the beacon message as needing reconfiguration. Accordingly, the cloud server can transmit an acknowledgement message to the sensor device and include a bit therein instructing the sensor device to remain out of the low power sleep mode. Then, the cloud server can obtain reconfiguration information from the database and transmit a reconfiguration message to the sensor device. When the cloud server fails to receive an acknowledgement message responsive to the reconfiguration message after a predetermined period of time, for example, because an acknowledgement message transmitted by the sensor device responsive to the received reconfiguration message was not received by the cloud server, the cloud server can retransmit the reconfiguration message to the sensor device. Upon receipt of the transmitted and/or retransmitted reconfiguration message, the sensor device can reconfigure itself according to information in the message and transmit an acknowledgement message to the cloud server to indicate successful reconfiguration. Upon receipt of the acknowledgement message, the cloud server can update the database to indicate that the sensor device has been reconfigured and transmit an acknowledgement message to the sensor device indicating that reconfiguration is complete and/or that the sensor device must no longer remain out of the low power sleep mode. Upon receipt of such a message, the sensor device can reenter the low power sleep mode.

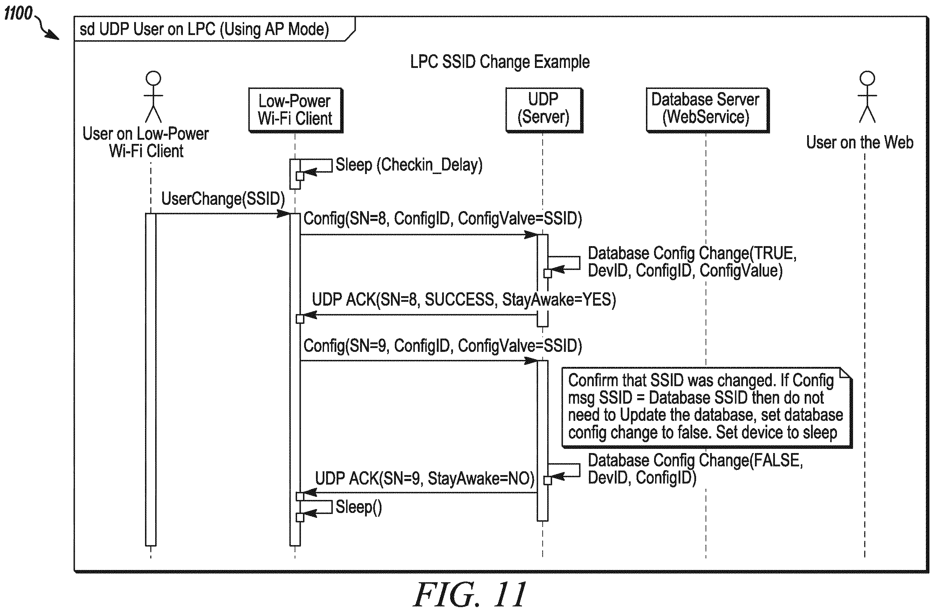

FIG. 11 is a flow diagram of a method 1100 of a sensor device exiting a low power sleep mode to transmit a reconfiguration message in accordance with disclosed embodiments. As seen in FIG. 11, a sensor device can receive reconfiguration instructions from a local user and exit a low power sleep mode responsive to receipt of such instructions. Then, the sensor device can transmit a reconfiguration message to a cloud server to advise the cloud server of the sensor device's reconfiguration. The cloud server can update an associated database to indicate the sensor device's reconfiguration and transmit an acknowledgement message to the sensor device. Because the cloud server updated the database responsive to the reconfiguration message, the acknowledgement message transmitted by the cloud server can instruct the sensor device to remain out of the low power sleep mode. Accordingly, the sensor device can transmit a second reconfiguration message to the cloud server. However, responsive to the second reconfiguration message, the cloud server can determine that the database need not be updated because the configuration of the sensor device identified in the database matches the configuration of the sensor device identified in the received reconfiguration message. Accordingly, the cloud server can transmit a second acknowledgement message to the sensor device absent instructions to remain out of the low power sleep mode. Then, upon receipt of the second acknowledgement message, the sensor device can reenter the low power sleep mode.

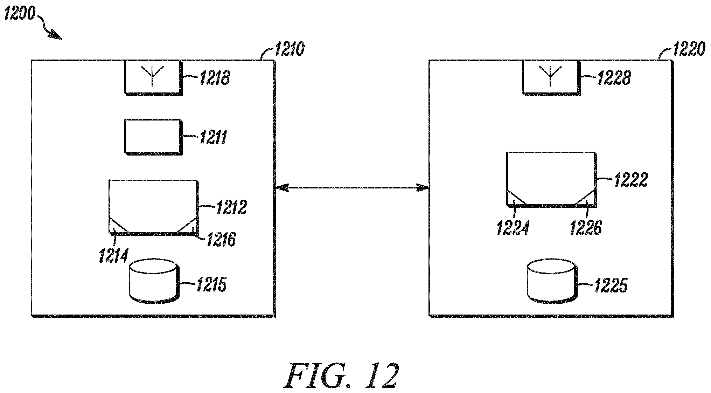

FIG. 12 is a block diagram of a system 1200 for executing the methods described above and others in accordance with disclosed embodiments. As seen in FIG. 12, the system 1200 can include a sensor device 1210 or other low power wireless device in wireless communication with a cloud server device 1220. In some embodiments, the sensor device 1210 can communicate with the cloud server device 1220 via an access point that is local to a region in which the sensor device 1220 is located, via a Wi-Fi network, via the internet, and/or via a UDP connection. In some embodiments, the sensor device 1210, the cloud server device, and/or the access point can be compatible with IEEE 802.11.

The sensor device 1210 can include one or more sensor 1211 for sensing a condition, such as an ambient condition or a condition of the device 1210, a transceiver 1218, for example, a radio, control circuitry 1212, one or more programmable processors 1214, a memory device 1215, and executable control software 1216 as would be understood by those of skill in the art. Similarly, the cloud server device 1220 can include a transceiver 1228, control circuitry 1222, one or more programmable processors 1224, a memory device 1225, and executable control software 1226 as would be understood by those of skill in the art. The executable control software 1216, 1226 can be stored on a respective transitory or non-transitory local computer readable medium, including, but not limited, to local computer memory, RAM, optical storage media, magnetic storage media, flash memory, and the like.

Although a few embodiments have been described in detail above, other modifications are possible. For example, the logic flows described above do not require the particular order described, or sequential order, to achieve desirable results. Other steps may be provided, or steps may be eliminated, from the described flows, and other components may be added to, or removed from, the described systems. Other embodiments may be within the scope of the invention.

## Claims

1. A sensor device comprising:
a transceiver (1218);
a programmable processor (1214); and
executable control software (1226) stored on a non-transitory computer readable medium (1225),
wherein at least the transceiver (1228) is in a low power sleep mode until the programmable processor (1214) and the executable control software (1226) detect a first condition, said first condition is a clock interrupt comprising a Manchester edge triggering event, expiration of a beacon, or check-in time event,
wherein, when the programmable processor (1214) and the executable control software (1226) detect the first condition, the transceiver 1218) exits the low power sleep mode and the programmable processor (1214) and the executable software (1216) construct and transmit a check-in message, via the transceiver, to a remote device (1220), and
wherein, when the programmable processor and the executable control software detect a third condition, the transceiver enters the low power sleep mode,
**characterized in that**
when the programmable processor (1214) and the executable control software (1216) detect a second condition, the transceiver (1218) remains out of the low power sleep mode until detection of the third condition, and wherein the second condition includes receipt of an acknowledgement message from the remote device (1220) that includes an asserted stay awake indication,
wherein, after receipt of the acknowledgement message from the remote device (1220) that includes the asserted stay awake indication and receipt of a reconfiguration message from the remote device,
said sensor device after successful reconfiguration of itself transmits an acknowledgement to indicate successful reconfiguration, and
wherein said third condition is detected subsequent to said transmission of said acknowledgement indicating successful reconfiguration, said third condition is the reception from the remote device of
an acknowledgement indicating that reconfiguration is complete and/or that the sensor device (1210) may return to the low power sleep mode

2. The sensor device according to claim 1 wherein the remote device (1220) includes at least one of a cloud server and a web server.

3. The sensor device according to claim 1 wherein the check-in message
includes a UDP message, and wherein the transceiver converts from communicating with the remote device via the UDP message to communicating with the remote device via a TCP connection when the second condition is detected.

## Patentansprüche

1. Sensorvorrichtung, die aufweist:
einen Transceiver (1218);
einen programmierbaren Prozessor (1214); und
ausführbare Steuersoftware (1226), die auf einem nichtflüchtigen computerlesbaren Medium (1225) gespeichert ist,
wobei sich mindestens der Transceiver (1228) in einem Schlafmodus mit niedriger Leistungsaufnahme befindet, bis der programmierbare Prozessor (1214) und die ausführbare Steuersoftware (1226) eine erste Bedingung erfassen, wobei die erste Bedingung ein Clock-Interrupt ist, aufweisend ein Manchester-Flankentriggerereignis, Ablaufen eines Beacons oder ein Check-In-Zeitereignis,
wobei, wenn der programmierbare Prozessor (1214)und die ausführbare Steuersoftware (1226) die erste Bedingung erfassen, der Transceiver (1218) den Schlafmodus mit niedriger Leistungsaufnahme verlässt und der programmierbare Prozessor (1214) und die ausführbare Software (1216) eine Check-In-Nachricht erstellen und über den Transceiver an eine entfernte Vorrichtung (1220) übertragen und
wobei, wenn der programmierbare Prozessor und die ausführbare Steuersoftware eine dritte Bedingung erfassen, der Transceiver in den Schlafmodus mit niedriger Leistungsaufnahme eintritt,
**dadurch gekennzeichnet, dass**, wenn der programmierbare Prozessor (1214) und die ausführbare Steuersoftware (1216) eine zweite Bedingung erfassen, der Transceiver (1218) bis zur Erfassung der dritten Bedingung außerhalb des Schlafmodus mit niedriger Leistungsaufnahme verbleibt und wobei die zweite Bedingung den Empfang einer Bestätigungsnachricht von der entfernten Vorrichtung (1220), die eine zugesicherte Stay-Awake-Anzeige enthält, beinhaltet,
wobei nach Empfang der Bestätigungsnachricht von der entfernten Vorrichtung (1220), die die zugesicherte Stay-Awake-Anzeige enthält, und Empfang einer Neukonfigurationsnachricht von der entfernten Vorrichtung die Sensorvorrichtung nach erfolgreicher eigener Neukonfiguration eine Bestätigung zum Anzeigen erfolgreicher Neukonfiguration übermittelt und
wobei die dritte Bedingung im Anschluss an die Übermittlung der die erfolgreiche Neukonfiguration anzeigenden Bestätigung erfasst wird, wobei die dritte Bedingung der Empfang von der entfernten Vorrichtung einer Bestätigung ist, die anzeigt, dass die Neukonfiguration abgeschlossen ist und/oder dass die Sensorvorrichtung (1210) in den Schlafmodus mit niedriger Leistungsaufnahme zurückkehren kann.

2. Sensorvorrichtung nach Anspruch 1, wobei die entfernte Vorrichtung (1220) einen Cloud-Server und/oder einen Web-Server beinhaltet.

3. Sensorvorrichtung nach Anspruch 1, wobei die Check-In-Nachricht eine UDP-Nachricht enthält und wobei der Transceiver von Kommunikation mit der entfernten Vorrichtung mittels der UDP-Nachricht zu Kommunikation mit der entfernten Vorrichtung mittels einer TCP-Verbindung wandelt, wenn die zweite Bedingung erfasst wird.

## Revendications

1. Dispositif capteur comprenant :
un émetteur-récepteur (1218) ;
un processeur programmable (1214) ; et
un logiciel de commande exécutable (1226) stocké sur un support lisible par ordinateur non transitoire (1225),
dans lequel au moins l'émetteur-récepteur (1228) se trouve dans un mode veille à faible puissance jusqu'à ce que le processeur programmable (1214) et le logiciel de commande exécutable (1226) détectent une première condition, ladite première condition est une interruption d'horloge comprenant un événement de déclenchement de bord Manchester, l'expiration d'une balise, ou un événement de temps de contrôle,
dans lequel, lorsque le processeur programmable (1214) et le logiciel de commande exécutable (1226) détectent la première condition, l'émetteur-récepteur (1218) sort du mode veille à faible puissance, et le processeur programmable (1214) et le logiciel exécutable (1216) élaborent et transmettent un message de contrôle, par le biais de l'émetteur-récepteur, vers un dispositif distant (1220), et
dans lequel, lorsque le processeur programmable et le logiciel de commande exécutable détectent une troisième condition, l'émetteur-récepteur entre dans le mode veille à faible puissance,
**caractérisé en ce que**
lorsque le processeur programmable (1214) et le logiciel de commande exécutable (1216) détectent une deuxième condition, l'émetteur-récepteur (1218) reste hors du mode veille à faible puissance jusqu'à la détection de la troisième condition, et dans lequel la deuxième condition comprend la réception d'un message d'accusé de réception provenant du dispositif distant (1220) qui comprend une indication de maintien en veille activée,
dans lequel, après la réception du message d'accusé de réception provenant du dispositif distant (1220) qui comprend l'indication de maintien en veille activée et la réception d'un message de reconfiguration provenant du dispositif distant, ledit dispositif capteur, après une reconfiguration réussie de lui-même, transmet un accusé de réception pour indiquer la reconfiguration réussie, et
dans lequel ladite troisième condition est détectée après ladite transmission dudit accusé de réception indiquant la reconfiguration réussie, la troisième condition est la réception provenant du dispositif distant d'un accusé de réception indiquant que la reconfiguration est exécutée et/ou que le dispositif capteur (1210) peut retourner au mode veille à faible puissance.

2. Dispositif capteur selon la revendication 1 dans lequel le dispositif distant (1220) comprend au moins un serveur parmi un serveur en nuage et un serveur Web.

3. Dispositif capteur selon la revendication 1 dans lequel le message de contrôle comprend un message UDP, et dans lequel l'émetteur-récepteur convertit à partir d'une communication avec le dispositif distant par le biais du message UDP en une communication avec le dispositif distant par le biais d'une connexion TCP lorsque la deuxième condition est détectée.
